# FASCICULE DE BREVET EUROPEEN

(11) **EP 2 695 859 B1**
(45) Date de publication et mention de la délivrance du brevet: **16.09.2015**
(21) Numéro de dépôt: 12305993.3
(22) Date de dépôt: 09.08.2012
(51) Int. Cl.: C01C 1/00, F01N 3/20

(54) **Structure de stockage d'ammoniac et systèmes et procédé associés**
Struktur zur Lagerung von Ammoniak und entsprechende Systeme und Verfahren
Ammonia storage structure and associated systems and method

(43) Date de publication de la demande: 12.02.2014
(73) Titulaire: Aaqius & Aaqius S.A., 1207 Genève (CH)
(72) Inventeur: Dementhon, Jean-Baptiste, 75011 Paris (FR); Levy, Michael Francis, 75015 Paris (FR)
(74) Mandataire: Regimbeau

(56) Documents cités:
- EP-A1- 1 977 817
- EP-A1- 2 386 523
- EP-A1- 2 428 490
- WO-A1-2010/025948
- WO-A1-2011/038916
- DE-A1-102008 002 338
- HAN AND K H LEE J H: "Gas permeability of expanded graphite-metallic salt composite", APPLIED THERMAL ENGINEERING, PERGAMON, OXFORD, GB, vol. 21, no. 4, 1 mars 2001 (2001-03-01), pages 453-463, XP002620755, ISSN: 1359-4311

## Description

### Domaine de l'invention

L'invention concerne d'une façon générale le stockage de l'ammoniac dans des applications de réduction des oxydes d'azote NOx par réduction catalytique sélective (SCR), notamment pour la réduction des émissions de polluants par les moteurs à combustion interne, en particulier les moteurs diesel.

### Etat de l'art

Les émissions de polluants liées au transport sont depuis près de trente ans un moteur de progrès de premier plan de l'industrie. L'augmentation progressive de la sévérité des limites en émission pour les quatre polluants réglementés (CO, HC, NOₓ, particules) a permis d'améliorer significativement la qualité de l'air notamment dans les grandes agglomérations.

L'utilisation toujours croissante de l'automobile nécessite de poursuivre les efforts pour réduire encore davantage ces émissions de polluants. Une diminution de la tolérance vis-à-vis des seuils d'émission Européens est attendue en 2014 dans le cadre des étapes pour l'entrée en vigueur de la norme Euro6. De telles mesures visent à réduire la pollution locale. Disposer de technologies de dépollution à forte efficacité dans toutes les conditions de roulage est ainsi un enjeu majeur pour l'industrie du transport. Dans ce contexte, la réduction des oxydes d'azote (NOₓ) en mélange pauvre, c'est-à-dire en mélange comprenant de l'oxygène en excès, représente un enjeu important associé à une problématique complexe.

Par ailleurs, la consommation de carburant, en lien direct avec les émissions de CO₂, a été propulsée en quelques années au rang de préoccupation majeure de l'automobile. Ainsi, une réglementation a été mise en place au niveau Européen à partir de 2012 sur les émissions de CO₂ des véhicules particuliers. Il est d'ores et déjà acquis que cette limite sera régulièrement abaissée au cours des décennies à venir. La réduction des émissions CO₂ s'est donc imposée comme le nouveau moteur de croissance pour toute l'industrie des transports.

Cette double problématique réduction de la pollution locale (NOₓ) et réduction de la consommation carburant (CO₂) est particulièrement difficile pour le moteur Diesel dont la combustion en mélange pauvre s'accompagne d'émissions en NOₓ difficile à traiter.

Dans ce contexte, la technologie de post-traitement SCR (« selective catalytic réduction », réduction catalytique sélective en terminologie anglo-saxonne) est utilisée aussi bien pour les véhicules particuliers que pour les véhicules affectés au transport de marchandises. Il est alors possible de positionner le moteur sur son fonctionnement optimal en rendement, les fortes émissions de NOₓ étant ensuite traitées dans l'échappement par le système SCR permettant une réduction NOx avec une forte efficacité.

Pour permettre la mise en place d'une telle technologie SCR il est nécessaire d'embarquer à bord du véhicule un agent réducteur nécessaire pour la réduction des oxydes d'azote. Le système actuellement retenu par les poids lourds utilise l'urée en solution aqueuse comme agent réducteur. Injecté à l'échappement, l'urée se décompose par effet de la température des gaz d'échappement en ammoniac (NH₃) et permet la réduction des NOₓ sur un catalyseur spécifique. Une solution aqueuse d'urée retenue et standardisée pour le fonctionnement des systèmes actuellement en série de SCR est référencée en AUS32 (le nom commercial en Europe étant Adblue ®)

Ce procédé très efficace souffre pourtant d'un certain nombre d'inconvénients. Il présente une efficacité à froid limitée, alors qu'une telle situation se présente dans plusieurs cas, notamment celui des bus en ville. Le réservoir d'urée présente une masse et un volume important, typiquement 15 à 30L pour un véhicule particulier, 40 à 80L pour un poids-lourds. Un tel encombrement entraîne une complexité d'intégration dans le véhicule d'autant plus importante que le véhicule est petit. Il en résulte un coût élevé de la dépollution, ainsi qu'un excédent de masse qui se fait au détriment de la consommation en carburant du véhicule et donc des émissions de CO2.

Diverses méthodes alternatives de stockage ont été envisagées. L'option de stocker l'ammoniac sous forme gazeuse sous pression présente de nombreux inconvénients en termes de compacité et de sécurité de fonctionnement.

Une méthode privilégiée consiste en une absorption du gaz à l'intérieur d'un matériau, par exemple un sel, disposé dans une enceinte de stockage. Le stockage d'ammoniac est alors réalisé au sein du sel par la formation de complexe chimique du type ammoniacate. Les avantages de ce type de stockage par rapport à l'urée en solution aqueuse sont nombreux. Le stockage au sein d'un sel permet une réduction de masse et de volume du réservoir de stockage significative. Il permet également un bénéfice en termes de bilan CO₂ en raison de la diminution de la masse de réducteur à embarquer pour une autonomie en ammoniac donnée. On économise en effet la quantité d'eau additionnelle prévue pour diluer l'urée dans la configuration classique de la SCR, dite liquide. Par ailleurs, ce type de stockage permet de mettre en oeuvre une absorption de NOₓ à froid avec une efficacité plus élevée. Ce type de stockage assure de plus une réduction des coûts de fabrication car le système d'alimentation et injection de l'ammoniac peut être simplifié. DE 102008002338 décrit une telle structure de stockage d'ammoniac dans un sel en mélange avec des copeaux d'un matériau ayant une conductivité thermique supérieure au sel.

Pour limiter l'encombrement de l'enceinte de stockage, les constructeurs automobiles privilégient un remplissage ou un remplacement de l'enceinte de stockage, par exemple lors de la maintenance moteur, au moment de la vidange, ou lors d'un remplissage réservoir carburant. La quantité d'ammoniac embarquée à bord d'un véhicule particulier sera de l'ordre de 6 kg pour un équivalent 16 L d'une solution d'urée de type AUS32, ce qui permet d'assurer l'autonomie du véhicule particulier entre deux intervalles de vidange du véhicule. Pour permettre l'alimentation du système en ammoniac, il est prévu un élément de chauffage, électrique ou via un fluide caloporteur par exemple, contrôlé de sorte à doser dans chaque condition d'utilisation l'ammoniac destiné au traitement des oxydes d'azote.

Une fois l'enceinte de stockage, par exemple une cartouche, vide, elle est remplacée par une pleine, par exemple lors d'une maintenance de véhicule, la vide étant renvoyée à une centrale de remplissage. Une cartouche pourra ainsi subir de dix à quinze cycles de vidage / remplissage.

Pour limiter la puissance électrique moyenne utilisée pour la gestion du déstockage d'ammoniac, on peut recourir à un additif complétant la matrice de sel, ledit additif présentant une conductivité thermique très supérieure au sel, ce qui permettra de faciliter le transfert de chaleur depuis l'organe de chauffage jusqu'au coeur du matériau de stockage. Cet additif pourra typiquement être du graphite naturel expansé.

La bonne formulation dudit additif possède par ailleurs d'autres vertus. Tout d'abord, sa présence peut permettre de faciliter la phase de remplissage en ammoniac lors de la maintenance (temps de remplissage raccourci). Enfin la présence de cet additif pourra apporter un bénéfice quant à la durabilité du système. Notamment au cours des cycles successifs de vidage remplissage de la cartouche.

En effet, au cours de la réaction d'absorption, la fixation de l'ammoniac gazeux par le sel solide constituant matériau de stockage s'accompagne d'une augmentation de volume, l'ammoniacate occupant alors un volume très supérieur au volume du sel pur. Le volume du sel après absorption peut être jusqu'à quatre à cinq fois plus important que le volume du sel sans ammoniac. L'augmentation de volume du sel est due non seulement à la dilatation du réseau cristallin du matériau mais aussi à son fractionnement laissant ainsi de l'espace libre entre les microcristaux de complexe ammoniacate. Les phases successives de dilatation, contraction de la matrice poreuse peuvent ainsi provoquer localement des phénomènes de frittage ce qui a un effet négatif sur l'homogénéité de la porosité et de manière générale sur la durabilité du matériau.

La réalisation d'un mélange optimal entre la phase stockante (sel) et l'additif est donc une des clés de réalisation du système. Une technique connue pour la réalisation d'un tel mélange, consiste à obtenir le lien entre phase stockante et additif via un bain de méthanol. Ce procédé extrapolé à l'échelle d'une production série automobile se révèle complexe et onéreuse en investissement, du fait de l'intervention d'un produit intermédiaire, en l'occurrence le méthanol, et des nombreuses phases supplémentaires de fabrication, telles que la préparation du bain de méthanol, la création des conditions thermodynamiques du mélange entre les deux produits dans la proportion recherchée, le séchage de l'ensemble et le conditionnement de la matrice ainsi obtenue.

### Résumé de l'invention

Un but de l'invention est de fournir une structure et un mode de réalisation d'une matrice destinée au stockage de l'ammoniac, comprenant un matériau destiné au stockage proprement dit par absorption, qui permette un fonctionnement amélioré et une plus grande efficacité.

A cet effet, il est prévu une structure de stockage d'ammoniac selon la revendication 1.

L'invention est avantageusement complétée par les caractéristiques suivantes, prises seules ou en une quelconque de leurs combinaisons techniquement possibles :
- l'au moins une couche de stockage de l'ammoniac comprend un sel pulvérulent,
- le sel pulvérulent est choisi parmi les composés suivants : SrCl₂, MgCl₂, BaCl₂, CaCl₂, NaCl₂,
- le sel est constitué de grains dont la granulométrie moyenne est comprise entre 1 et 1000 µm,
- la masse de matériau thermiquement conducteur constitue entre 1 % et 30% de la masse de sel,
- l'au moins une couche de stockage de l'ammoniac comprend un mélange de sel pulvérulent et de matériau thermiquement conducteur,
- l'au moins une couche de stockage est une galette rigide compressée ou non compressée,
- le nombre de couches de matériau thermiquement conducteur est compris entre 1 et 30,
- le matériau thermiquement conducteur est du graphite naturel expansé.

Selon un autre aspect, l'invention concerne un système de stockage et de déstockage d'ammoniac d'un véhicule comprenant une enceinte de stockage, l'enceinte de stockage comprenant une telle structure de stockage.

L'invention est avantageusement complétée par les caractéristiques suivantes, prises seules ou en une quelconque de leurs combinaisons techniquement possibles :
- les couches de la structure de stockage présentent une symétrie de révolution,
- la structure présente un évidement le long de l'axe de symétrie de révolution pour permettre le stockage et/ou le déstockage d'ammoniac au niveau de chaque couche de stockage,
- le système comprend un dispositif de chauffage de la structure de stockage pour le déstockage de l'ammoniac stocké dans la structure,
- le dispositif de chauffage comprend plusieurs modules chauffants, chaque module chauffant étant adapté pour chauffer une couche de stockage indépendamment d'autres couches de stockage,
- la structure comprend des canaux d'acheminement d'ammoniac de l'extérieur de l'enceinte vers l'au moins une couches de stockage et dans le sens inverse,

Selon un autre aspect, l'invention concerne un tel système de stockage d'ammoniac et un module d'injection de l'ammoniac dans les gaz d'échappement.

Selon un autre aspect, l'invention concerne un procédé d'obtention d'une telle structure de stockage d'ammoniac, le procédé comprenant des étapes consistant à :
- déposer une couche de stockage comprenant un sel non compressé ou préalablement compressé,
- déposer une couche en un matériau thermiquement conducteur présentant une conductivité thermique plus élevée que celle de la couche de stockage, constitué d'une poudre préalablement compressée,
ces deux étapes étant répétées alternativement pour former une structure comprenant une alternance de couches de stockage et à couche(s) de matériau thermiquement conducteur intercalaire(s).

### Brève description des figures

D'autres caractéristiques, buts et avantages de l'invention apparaitront lors de la description ci-après d'un mode de réalisation. Aux dessins annexés :
- la figure 1 représente un moteur thermique équipé d'un système de post-traitement SCR par injection d'ammoniac selon un mode de réalisation de l'invention,
- La figure 2a représente la structure cristalline d'une couche de sel de MgCl2,
- la figure 2b représente une molécule d'ammoniac,
- la figure 2c représente la structure cristalline du MgCl₂(NH₃)₂,
- la figure 2d la structure cristalline du MgCl₂(NH₃)₆,
- les figures 3a à 3d représentent l'ajout d'additif en poudre à un sel selon l'art antérieur,
- les figures 4a à 4h représentent un procédé de réalisation de la structure de stockage selon un mode de réalisation de l'invention,
- le tableau 1 représente le ratio d'expansion théorique de complexes ammoniacates.

### Description détaillée de l'invention

### 1) Propriétés connues de la chemisorption d'ammoniac dans les sels

### a) Réaction

Dans une structure de stockage, un sel pulvérulent est choisi parmi les chlorures d'alcalino-terreux. En particulier, le sel pulvérulent est choisi parmi les composés suivants : SrCl₂, MgCl₂, BaCl₂, CaCl₂, NaCl₂. Le stockage d'ammoniac repose par ailleurs sur une réaction réversible solide - gaz du type :

< Solide A > + (Gaz) ⇄ < Solide B >

L'ammoniac forme avec les chlorures d'alcalino-terreux des complexes de coordination aussi appelés ammoniacates. Ce phénomène est connu de l'homme du métier.

Par exemple, les réactions de l'ammoniac avec le chlorure de strontium sont :

SrCl₂ (s) + NH₃ (g) ⇄ Sr(NH₃)Cl₂ (s)

Sr(NH₃)Cl₂ (s) + 7 NH₃ (g) ⇄ Sr(NH₃)₈Cl₂ (s)

De même l'unique réaction de l'ammoniac avec le chlorure de barium est :

BaCl₂ (s) + 8 NH₃ (g) ⇄ Ba(NH₃)₈Cl₂ (s)

L'absorption chimique du ligand ammoniac par l'absorbant SrCl₂ et BaCl2 entraîne, entre le solide et le gaz, un transfert d'électrons qui se traduit par des liaisons chimiques entre NH₃ et la couche externe des atomes de SrCl₂ et BaCl₂. La pénétration du gaz dans la structure du solide se faisant dans la totalité de sa masse par un processus de diffusion. Cette réaction est parfaitement réversible, l'absorption étant exothermique et la désorption endothermique.

### b) Dilatation

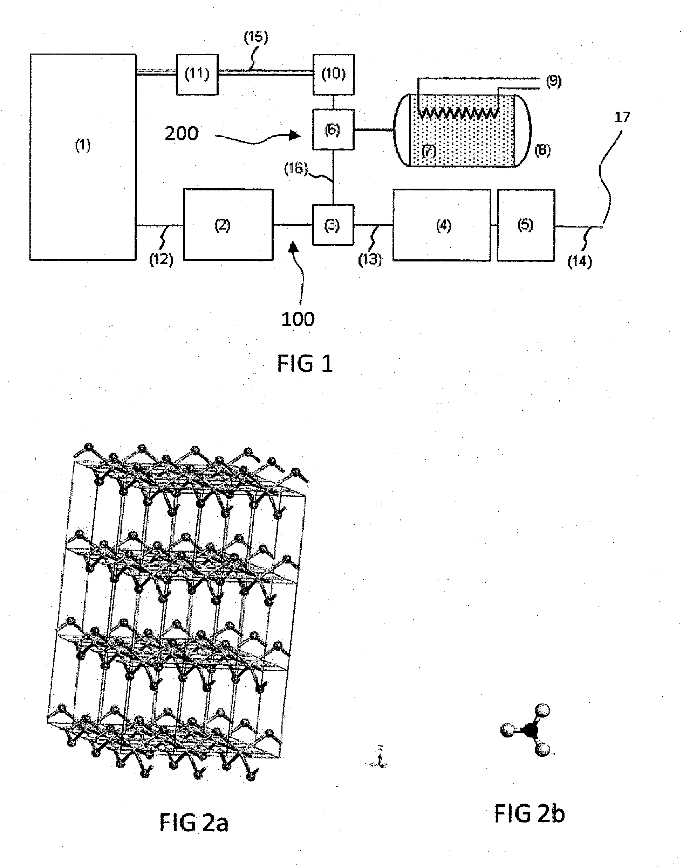

En référence aux figures 2a à 2d, la dilatation résultant du phénomène d'absorption dans le cas du sel chlorure de magnésium est décrit. La figure 2a représente la structure cristalline d'une couche de sel de MgCl₂. La figure 2b représente une molécule d'ammoniac.

Les réactions de l'ammoniac avec le chlorure de magnésium sont de la forme :

MgCl₂ (s) + nNH₃ (g) ⇄ MgCl₂ (NH₃)ₙ (s)

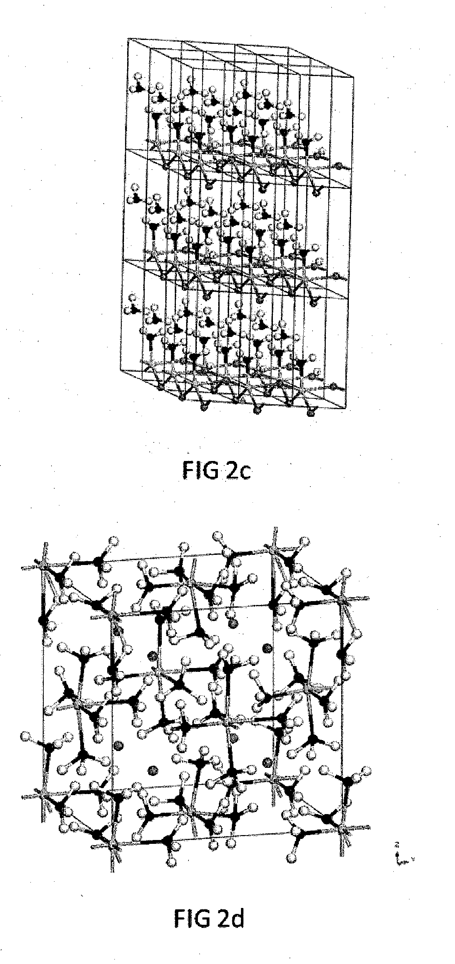

Où n peut valoir 2 ou 6. Ainsi la figure 2c représente la structure cristalline du MgCl₂(NH₃)₂ et la figure 2d la structure crystalline du MgCl₂(NH₃)₆.

En référence à la table 1, il est indiqué le facteur de dilatation théorique entre différents sels pur et leurs complexes purs associés. Cette valeur correspond uniquement à la dilatation du réseau cristallin, n'intègre par la dilatation du au fractionnement entre les microcristaux. Les valeurs d'enthalpie d'absorption à l'équilibre à pression de vapeur basse.

**Tableau 1**

| Formule moléculaire | Masse moléculaire (g/mol) | Densité (kg/L) | Facteur de dilatation | Enthalpie d'absorption (kJ/mol) | Entropie d'absorption (J/mol.K) |
|---|---|---|---|---|---|
| (NH₂)₂CO⁺H2O | N/A | 1,086 | | 0,184 | 0,2 |
| MgCl₂ | 95,21 | 2,32 | | | |
| Mg(NH₃)₆Cl₂ | 197,39 | 1,16 | 2 | 55,7 | 230 |
| SrCl₂ | 158,53 | 3,05 | | | |
| Sr(NH₃)₈Cl₂ | 294,77 | 1,3 | 2,35 | 38,7 | 230 |
| BaCl₂ | 208,23 | 3,85 | | | |
| Ba(NH₃)₈Cl₂ | 344,37 | 1,7 | 2,26 | 41,4 | 230 |
| NH₃ | 17,03 | 0,61 | | | |

### c) Conditions sur la structure de stockage

Une structure de stockage d'ammoniac doit pouvoir assurer plusieurs cycles de remplissage/vidage au cours de la vie du véhicule auquel elle est associée. Ces cycles de vidage/remplissage donnent lieu à des changements de phase de l'ammoniac. Le vidage sera provoqué par élévation de température de la structure, le remplissage quant à lui est assuré après connexion d'une enceinte 8 à un circuit d'alimentation 200 d'ammoniac sous pression et via un dispositif de refroidissement de l'ensemble, destiné à évacuer les calories dégagées lors du changement de phase de l'ammoniac.

Dans le cas d'une absorption du gaz dans un sel pulvérulent, le gaz diffuse au travers du milieu poreux de sel de la structure de stockage, depuis le grain de sel vers la sortie de l'enceinte, par exemple une cartouche, permettant la mise à disposition de l'ammoniac à injecter à l'échappement.

Lors de la phase de conditionnement et de reconditionnement de l'enceinte, l'ammoniac est réintroduit dans le système, diffuse au sein du milieu poreux créé par le sel pulvérulent et s'absorbe au sein des grains de sel. Le cycle de ces transformations dans le temps, ou respiration du matériau, doit pouvoir se faire sans détérioration de la capacité de stockage et avec des durées raisonnables. Des gradients de compression hétérogènes dans le sel et des mécanismes de frittage peuvent en effet détériorer la structure de stockage.

Lors d'une phase de désorption, il convient de pouvoir disposer de gaz sous pression disponible dans un délai compatible avec la réglementation, laquelle prévoit de mesurer l'efficacité du système SCR à diverses températures de fonctionnement comprises entre -15°C et 25°C.

Lors d'une phase d'absorption correspondant à un conditionnement ou à un reconditionnement de l'enceinte 8, il convient également de minimiser la durée de remplissage de la cartouche afin de maitriser le coût de l'opération, qu'il s'agisse de la fabrication initiale de la cartouche ou de sa recharge lors de la vie du véhicule.

### d) Additifs

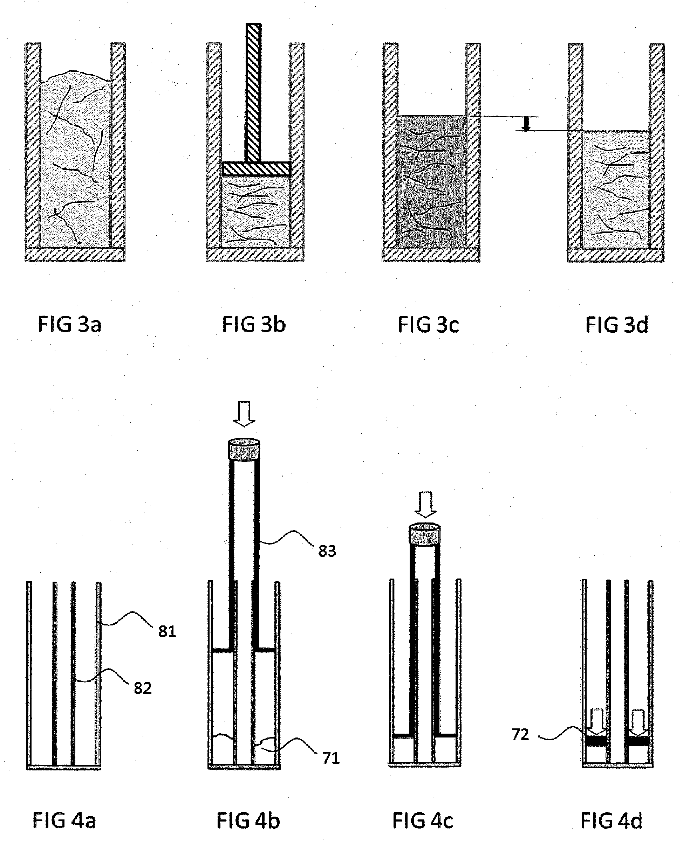

En référence aux figures 3a à 3d, il est décrit l'ajout d'additif en poudre à un sel selon l'art antérieur. Pour améliorer la conductivité thermique, ce qui conduit à une diminution de la puissance électrique nécessaire à la gestion de l'ensemble et à un raccourcissement du temps nécessaire à la recharge du système, pour maintenir une bonne durabilité de ladite matrice au cours de ses dilatations et compressions successives, et rendre la structure de stockage plus robuste, c'est-à-dire plus apte à se remplir, l'ajout de divers additifs a été envisagé dans l'état de l'art.

L'additif peut comprendre du graphite naturel expansé qui peut ainsi être ajouté au sel avant d'être compacté.

L'additif peut comprendre une poudre de métal, par exemple une poudre d'aluminium.

Ensuite lors de la désorption de l'ammoniac, le réseau créé par le graphite naturel expansé recompressé forme une structure robuste qui maintient les particules de sels déchargées en ammoniac. En pratique, le matériau ne se dilate donc pas d'un même facteur que ceux indiqués dans la table 1. Des trous se forment au coeur du matériau compacté.

En particulier, le sel peut être préalablement intégré intimement avec l'additif, introduit dans l'enceinte, puis compressé avant d'être chargé en ammoniac.

Une technique connue pour la réalisation d'un tel mélange, consiste à obtenir le lien entre phase de stockage et additif via un bain de méthanol. Ce procédé extrapolé à l'échelle d'une production série automobile se révèle complexe et onéreux en investissements, du fait de l'intervention d'un produit intermédiaire, en l'occurrence le méthanol, et des nombreuses phases supplémentaires de fabrication, telles que la préparation du bain de méthanol, la création des conditions thermodynamiques du mélange entre les deux produits dans la proportion recherchée, le séchage de l'ensemble et le conditionnement de la matrice ainsi obtenue.

Une autre approche, permet d'obtenir un mélange entre les deux phases de la matrice composite que sont le sel et l'additif, sans recours à un bain intermédiaire de méthanol. Le mélange est ainsi réalisé « à sec ». La figure 3a représente un mélange de sel et d'additif en poudre dans une enceinte. La figure 3b représente une étape de compactage du mélange de sel et d'additif en poudre expansé dans l'enceinte. La figure 3c représente le sel mélangé à l'additif saturé en ammoniac. La figure 3d représente le sel mélangé à l'additif après décharge de l'ammoniac. Le mélange est cependant complexe à réaliser car les deux composants ne partagent pas la même densité. L'utilisation d'un matériau non expansé permettrait de palier à cet inconvénient, mais provoquerait une baisse de la qualité de la matrice de stockage, notamment en abaissant sa conductivité thermique.

### 2) Structure illustrant un mode de réalisation de l'invention

La structure de stockage décrite ci-dessous a pour objet d'éviter les difficultés liées à un stockage dans une structure constituée uniquement de sel ou de sel mélangé à un additif.

La structure de stockage d'ammoniac comprend au moins une couche comprenant un sel pulvérulent adapté pour stocker et déstocker de l'ammoniac. La structure de stockage d'ammoniac comprend au moins une couche en un matériau thermiquement conducteur afin d'augmenter les transferts thermiques au sein de la structure.

La structure de stockage forme ainsi une structure de stockage d'ammoniac comprenant une alternance d'au moins une couche de stockage d'ammoniac et d'au moins une couche d'un matériau thermiquement conducteur. Par alternance, on entend une couche de stockage d'ammoniac et une couche d'un matériau thermiquement conducteur. Par alternance on entend donc que la structure comprend au moins ces deux couches, ou trois couches superposées, ou plus. Dans le cas de trois couches, l'alternance peut comprendre une couche de stockage disposée entre deux couches de matériau thermiquement conducteur, ou une couche de matériau thermiquement conducteur entre deux couches de stockage.

Ainsi, la structure de stockage d'ammoniac peut par exemple comprendre au moins deux couches comprenant un sel pulvérulent adapté pour stocker et déstocker de l'ammoniac. Les au moins deux couches de sel pulvérulent sont séparées l'une de l'autre par au moins une couche en un matériau thermiquement conducteur afin d'augmenter les transferts thermiques au sein de la structure. Le matériau thermiquement conducteur est un matériau présentant une conductivité thermique plus élevée que celle du sel auquel il est associé. Sa présence en couche intercalaire permet d'augmenter les transferts thermiques au sein de la structure de stockage. Une telle structure correspond également à une alternance. Par alternance on entend également une structure au sein de laquelle se trouvent en alternance un plus grand nombre de couches de stockage et de couches en un matériau thermiquement conducteur.

Le sel pulvérulent est choisi parmi les chlorures d'alcalino-terreux. En particulier, le sel peut être constitué des composés suivants : SrCl₂, MgCl₂, BaCl₂, CaCl₂, NaCl₂.

Les couches de sel comprennent préférentiellement des grains de sel dont la granulométrie est comprise entre 1 et 1000 µm. Préférentiellement, la masse de matériau thermiquement conducteur constitue entre 1 % et 30% de la masse de sel.

Le matériau thermiquement conducteur est par exemple constitué d'une poudre préalablement compressée formant les couches en matériau thermiquement conducteur. Alternativement, les couches en matériau thermiquement conducteur sont par exemple constituées d'une poudre non compressée.

Les couches en matériau thermiquement conducteur peuvent former des couches intercalaires entre lesquels de la poudre de sel non compressée est intégrée. Alternativement les couches de sel peuvent être formées de galettes rigides compressées ou non compressées.

Les couches de sels peuvent en outre comprendre un mélange de sel pulvérulent et d'un additif. L'additif peut être le matériau thermiquement conducteur. Dans ce mode réalisation, l'augmentation de la conductivité thermique de l'ensemble est réalisée en partie grâce aux couches intercalaires et en partie via la présence d'additif au sein de la couche destinée au stockage.

Le nombre de couches intercalaires de matériau thermiquement conducteur est préférentiellement compris entre 1 et 30.

Le matériau thermiquement conducteur peut par exemple être du graphite naturel expansé compressé en couches intercalaires. Le matériau thermiquement conducteur peut comprendre une poudre de métal, par exemple une poudre d'aluminium.

### 3) Exemple illustrant un mode de réalisation de système de post-traitement SCR

Sur la figure 1, on a représenté schématiquement un moteur thermique équipé d'un système de post-traitement SCR par injection d'ammoniac. Le moteur thermique peut être un moteur à combustion interne, par exemple un moteur diesel, ou un moteur essence à mélange pauvre, tel qu'un moteur à injection directe à mélange stratifié.

Un moteur 1 est piloté par un calculateur électronique 11. En sortie du moteur, des gaz d'échappement 12 sont dirigés vers un système de dépollution 2. Le système de dépollution 2 peut comprendre un catalyseur d'oxydation ou un catalyseur à trois voies. Le système de dépollution peut en outre comprendre un filtre à particules.

De l'ammoniac 16 est injecté au niveau d'un circuit d'échappement 100 du moteur et mélangé aux gaz d'échappement au moyen d'un module d'injection 3 disposé par exemple en aval de l'élément de dépollution 2 pour former un mélange ammoniac / gaz d'échappement 13. Le mélange ammoniac / gaz d'échappement 13 traverse ensuite un catalyseur SCR 4 qui permet la réduction des NOx par l'ammoniac. Des éléments complémentaires de post-traitement 5 peuvent être positionnés après le catalyseur SCR. Les éléments complémentaires 5 peuvent comprendre un filtre à particules ou un catalyseur d'oxydation. Les gaz d'échappement se présentent ainsi sous une forme de gaz d'échappement dépollués 14 en sortie des éléments complémentaires 5. Les gaz d'échappement dépollués sont ensuite dirigés vers une sortie d'échappement 17. Ainsi l'échappement 100 comprend, disposés de l'amont, côté moteur 1, à l'aval, côté sortie 17, l'élément de dépollution 2, le module d'injection 3, le catalyseur SCR 4, et les éléments complémentaires 5.

Pour assurer une alimentation et un dosage de l'ammoniac 16 en entrée du module d'injection 3, le système comprend une enceinte de stockage d'ammoniac 8 contenant une structure de stockage 7 pouvant être pilotée en température par un dispositif de réchauffage 9. Le dispositif de réchauffage 9 comprend par exemple une résistance électrique ou un échangeur de chaleur alimenté par un fluide caloporteur tel que le liquide de refroidissement moteur.

La structure de stockage 7 comprend au moins deux couches de sel pulvérulent, les au moins deux couches de sel pulvérulent étant séparées l'une de l'autre par au moins une couche en un matériau thermiquement conducteur.

Les couches de la structure de stockage 7 peuvent présenter une symétrie de révolution de même axe. La structure 7 peut alors présenter un évidement le long de l'axe de symétrie de révolution pour permettre le stockage et/ou le déstockage d'ammoniac au niveau de chaque couche de sel.

La structure 7 peut comprendre des canaux d'acheminement d'ammoniac de l'extérieur de l'enceinte 8 vers les couches de sel et/ou dans le sens inverse.

Le dispositif de chauffage 9 peut comprendre plusieurs modules chauffants (non représentés), chaque module chauffant étant adapté pour réchauffer une couche de sel indépendamment des autres couches de sel.

L'enceinte de stockage 8 est connectée à un dispositif 6 de contrôle en pression de l'enceinte et de dosage de l'ammoniac vers le module d'injection 3. Ce dispositif 6 peut être piloté par un contrôleur électronique dédié 10 relié au calculateur électronique 11 du moteur.

Le système comprend ainsi un circuit d'alimentation en ammoniac 200 comprenant, d'amont en aval dans le sens de circulation de l'ammoniac, l'enceinte de stockage 8, le dispositif 6, et le module d'injection 3 dans l'échappement 100.

Dans une configuration alternative non représentée, le dispositif 6 peut être directement piloté par le calculateur moteur 11.

### 4) Procédé d'obtention de la structure

En référence aux figures 4a à 4h, il est décrit un procédé de réalisation de la structure de stockage 7 décrite dans l'enceinte 8. A l'état initial, représenté figure 4a, l'enceinte 8 est vide. L'enceinte 8 présente une symétrie de révolution. L'enceinte 8 comprend une paroi extérieure 81 cylindrique et une paroi intérieure formant un tube 82 délimitant un évidement central s'étendant le long de l'axe de symétrie de l'enceinte 8.

En référence à la figure 4b, le procédé comprend une première étape de dépôt d'une première couche de sel pulvérulent non compressé ou préalablement compressé dans la zone annulaire située entre la paroi extérieure 81 de l'enceinte 8 et la paroi du tube 82.

En référence aux figures 4b et 4c, il est décrit une deuxième étape de mise en forme de la première couche de sel par un plongeur. Cette deuxième étape permet d'obtenir une première couche de sel homogène et d'épaisseur constante. La première couche de sel présente ainsi une symétrie de révolution de même axe que l'enceinte 8.

En référence à la figure 4d, il est décrit une troisième étape de dépôt d'une première couche en un matériau thermiquement conducteur 72 sur la première couche de sel 71. Le matériau thermiquement conducteur est par exemple en une strate de graphite naturel expansible. La couche en matériau thermiquement conducteur 72 présente les mêmes propriétés de symétrie de révolution que l'enceinte 8.

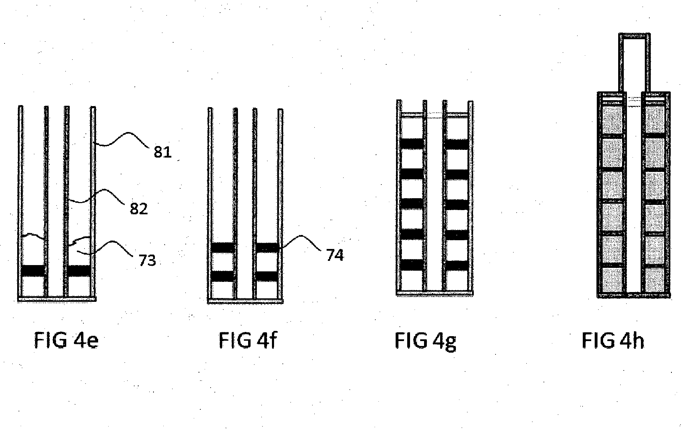

En référence à la figure 4e, il est décrit une quatrième étape de dépôt d'une deuxième couche de sel pulvérulent 73 non compressé sur la première couche en un matériau thermiquement conducteur 72.

La figure 4f représente l'enceinte 8 après le dépôt d'une deuxième couche en un matériau thermiquement conducteur 74. Comme illustré à la figure 4g, les trois premières étapes du procédé peuvent être répétées jusqu'à trente fois pour obtenir une structure de stockage 7 stratifiée.

La figure 4h représente une structure de stockage 7 complète saturée en ammoniac dans une enceinte 8 close en fonctionnement.

On peut intercaler des couches de matériau pur, de sel ou de graphite naturel expansé, avec des couches présentant un ratio massique donné entre le sel et un additif.

Par ailleurs, des galettes rigides de sel peuvent être préparées à l'avance par compression ou via l'utilisation d'un liant. On procède ensuite à l'implantation des couches de sel et de graphite naturel expansé par empilements successifs de galettes rigides.

## Revendications

1. Structure de stockage d'ammoniac (7), **caractérisée en ce qu'**elle comprend une alternance :
- d'au moins une couche de stockage (71, 73) d'ammoniac, et
- d'au moins une couche d'un matériau thermiquement conducteur (72) de conductivité thermique supérieure à celle de la couche de stockage (71, 73), l'au moins une couche de matériau thermiquement conducteur (72) étant destinée à augmenter les transferts thermiques au sein de la structure,
**caractérisée en ce que** l'au moins une couche de matériau thermiquement conducteur (72) est constituée d'une poudre préalablement compressée

2. Structure selon la revendication 1 **caractérisée en ce que** l'au moins une couche de stockage de l'ammoniac comprend un sel pulvérulent.

3. Structure selon la revendication 2, **caractérisée en ce que** le sel pulvérulent est choisi parmi les composés suivants : SrCl₂, MgCl₂, BaCl₂, CaCl₂, NaCl₂.

4. Structure selon l'une quelconque des revendications 2 ou 3, **caractérisée en ce que** le sel est constitué de grains dont la granulométrie moyenne est comprise entre 1 et 1000 µm.

5. Structure selon l'une quelconque des revendications 2 à 4, **caractérisée en ce que** la masse de matériau thermiquement conducteur constitue entre 1 % et 30% de la masse de sel.

6. Structure selon l'une quelconque des revendications 2 à 5, **caractérisée en ce que** l'au moins une couche de stockage (71, 73) de l'ammoniac comprend un mélange de sel pulvérulent et de matériau thermiquement conducteur.

7. Structure selon l'une des revendications 1 à 6, **caractérisée en ce que** l'au moins une couche de stockage (71, 73) est une galette rigide compressée ou non compressée.

8. Structure selon l'une quelconque des revendications 1 à 7, **caractérisée en ce que** le nombre de couches de matériau thermiquement conducteur (72, 74) est compris entre 1 et 30.

9. Structure selon l'une quelconque des revendications 1 à 8, **caractérisée en ce que** le matériau thermiquement conducteur est du graphite naturel expansé.

10. Système de stockage et de déstockage d'ammoniac d'un véhicule comprenant une enceinte de stockage (8), **caractérisé en ce que** l'enceinte de stockage (8) comprend une structure de stockage (7) selon l'une des revendications 1 à 9.

11. Système de stockage selon la revendication 10, **caractérisé en ce que** les couches de la structure de stockage (7) présentent une symétrie de révolution.

12. Système de stockage selon la revendication 11, **caractérisé en ce que** la structure (7) présente un évidement le long de l'axe de symétrie de révolution pour permettre le stockage et/ou le déstockage d'ammoniac au niveau de chaque couche de stockage (71, 73).

13. Système de stockage selon l'une quelconque des revendications 10 à 12, **caractérisé en ce qu'**il comprend un dispositif de chauffage (9) de la structure de stockage pour le déstockage de l'ammoniac stocké dans la structure (7).

14. Système de stockage selon la revendication 13, caractérisé en ce le dispositif de chauffage (9) comprend plusieurs modules chauffants, chaque module chauffant étant adapté pour chauffer une couche de stockage (71, 73) indépendamment d'autres couches de stockage.

15. Système de stockage selon l'une quelconque des revendications 10 à 14, **caractérisé en ce que** la structure (7) comprend des canaux d'acheminement d'ammoniac de l'extérieur de l'enceinte (8) vers l'au moins une couches de stockage et dans le sens inverse.

16. Système de réduction catalytique sélective pour gaz d'échappement de moteur à combustion interne, **caractérisé en ce qu'**il comprend un système de stockage d'ammoniac selon l'une des revendications 10 à 15 et un module d'injection de l'ammoniac dans les gaz d'échappement.

17. Procédé d'obtention d'une structure de stockage d'ammoniac selon l'une des revendications 1 à 9, le procédé comprenant des étapes consistant à :
- déposer une couche de stockage comprenant un sel (71) non compressé ou préalablement compressé,
- déposer une couche en un matériau thermiquement conducteur (72) présentant une conductivité thermique plus élevée que celle de la couche de stockage (71), constitué d'une poudre préalablement compressée,
ces deux étapes étant répétées alternativement pour former une structure comprenant une alternance de couches de stockage et à couche(s) de matériau thermiquement conducteur intercalaire(s).

## Patentansprüche

1. Ammoniakeinlagerstruktur (7), **dadurch gekennzeichnet, dass** sie abwechselnd Folgendes umfasst:
- mindestens eine Ammoniaklagerschicht (71, 73), und
- mindestens eine Schicht aus einem wärmeleitenden Material (72) mit einer Wärmeleitfähigkeit, die größer als die der Einlagerschicht (71, 73) ist, wobei die mindestens eine Schicht aus wärmeleitendem Material (72) dazu bestimmt ist, die Wärmeübertragungen innerhalb der Struktur zu steigern,
**dadurch gekennzeichnet, dass** die mindestens eine Schicht aus wärmeleitendem Material (72) aus zuvor gepresstem Pulver besteht.

2. Struktur nach Anspruch 1, **dadurch gekennzeichnet, dass** die mindestens eine Ammoniakeinlagerschicht ein pulverförmiges Salz umfasst.

3. Struktur nach Anspruch 2, **dadurch gekennzeichnet, dass** das pulverförmige Salz aus den folgenden Verbindungen gewählt wird: SrCl₂, MgCl₂, BaCl₂, CaCl₂, NaCl₂.

4. Struktur nach einem der Ansprüche 2 oder 3, **dadurch gekennzeichnet, dass** das Salz aus Körnern besteht, deren durchschnittliche Korngröße zwischen 1 und 1000 µm liegt.

5. Struktur nach einem der Ansprüche 2 bis 4, **dadurch gekennzeichnet, dass** die Masse des wärmeleitenden Materials von 1 % bis 30 % der Salzmasse bildet.

6. Struktur nach einem der Ansprüche 2 bis 5, **dadurch gekennzeichnet, dass** die mindestens eine Ammoniakeinlagerschicht (71, 73) eine Mischung aus pulverförmigem Salz und wärmeleitendem Material umfasst.

7. Struktur nach einem der Ansprüche 1 bis 6, **dadurch gekennzeichnet, dass** die mindestens eine Einlagerschicht (71, 73) ein gepresster oder nicht gepresster starrer Kuchen ist.

8. Struktur nach einem der Ansprüche 1 bis 7, **dadurch gekennzeichnet, dass** die Anzahl der Schichten aus wärmeleitendem Material (72, 74) zwischen 1 und 30 liegt.

9. Struktur nach einem der Ansprüche 1 bis 8, **dadurch gekennzeichnet, dass** das wärmeleitende Material expandierter natürlicher Graphit ist.

10. System zum Einlagern und Auslagern von Ammoniak eines Fahrzeugs, das eine Einlagereinfassung (8) umfasst, **dadurch gekennzeichnet, dass** die Einlagereinfassung (8) eine Einlagerstruktur (7) nach einem der Ansprüche 1 bis 9 umfasst.

11. Einlagersystem nach Anspruch 10, **dadurch gekennzeichnet, dass** die Schichten der Einlagerstruktur (7) rotationssymmetrisch sind.

12. Einlagersystem nach Anspruch 11, **dadurch gekennzeichnet, dass** die Struktur (7) eine Aussparung entlang der Rotationssymmetrieachse aufweist, um das Einlagern und/oder Auslagern von Ammoniak an jeder Einlagerschicht (71, 73) zu ermöglichen.

13. Einlagersystem nach einem der Ansprüche 10 bis 12, **dadurch gekennzeichnet, dass** es eine Heizvorrichtung (9) der Einlagerstruktur umfasst, um das in der Struktur (7) eingelagerte Ammoniak auszulagern.

14. Einlagersystem nach Anspruch 13, **dadurch gekennzeichnet, dass** die Heizvorrichtung (9) mehrere Heizmodule umfasst, wobei jedes Heizmodul geeignet ist, um eine Einlagerschicht (71, 73) unabhängig von anderen Einlagerschichten zu erhitzen.

15. Einlagersystem nach einem der Ansprüche 10 bis 14, **dadurch gekennzeichnet, dass** die Struktur (7) Ammoniakleitkanäle von außerhalb der Einfassung (8) bis zu mindestens einer Einlagerschicht und in die umgekehrte Richtung umfasst.

16. Selektives katalytisches Reduktionssystem für Verbrennungsmotorabgase, **dadurch gekennzeichnet, dass** es ein Ammoniakeinlagersystem nach einem der Ansprüche 10 bis 15 und ein Modul zum Einspritzen von Ammoniak in die Abgase umfasst.

17. Verfahren zum Erzielen einer Ammoniakeinlagerstruktur nach einem der Ansprüche 1 bis 9, wobei das Verfahren folgende Schritte umfasst:
- Abscheiden einer Einlagerschicht, die nicht gepresstes oder im Voraus gepresstes Salz (71) umfasst,
- Abscheiden einer Schicht aus einem wärmeleitenden Material (72), das eine Wärmeleitfähigkeit aufweist, die größer als die der Einlagerschicht (71) ist, die aus einem im Voraus gepressten Pulver besteht,
wobei diese beiden Schritte abwechselnd wiederholt werden, um eine Struktur zu bilden, die abwechselnd Einlagerschichten und eine oder mehrere Zwischenschichten aus wärmeleitendem Material umfasst.

## Claims

1. An ammonia storage structure (7), **characterized in that** it comprises alternatively:
- at least one ammonia storage layer (71, 73), and
- at least one layer of a heat-conducting material (72) having a thermal conductivity greater than that of the storage layer (71, 73), said at least one layer of heat-conducting material (72) being intended to increase thermal transfers within the structure,
**characterized in that** said at least one layer of heat-conducting material (72) consists of pre-compressed powder.

2. The structure according to claim 1, **characterized in that** said at least one ammonia storage layer includes a powdery salt.

3. The structure according to claim 2, **characterized in that** the powdery salt is chosen from the following compounds: SrCl₂, MgCl₂, BaCl₂, CaCl₂, NaCl₂.

4. The structure according to any one of claims 2 or 3, **characterized in that** the salt consists of grains the average particle size of which is comprised between 1 and 1000 µm.

5. The structure according to any one of claims 2 to 4, **characterized in that** the mass of the heat-conducting material is from 1 % to 30 % of the salt mass.

6. The structure according to any one of claims 2 to 5, **characterized in that** said at least one ammonia storage layer (71, 73) includes a mixture of powdery salt and heat-conducting material.

7. The structure according to any of claims 1 to 6, **characterized in that** said at least one storage layer (71, 73) is a compressed or uncompressed rigid cake.

8. The structure according to any one of claims 1 to 7, **characterized in that** the number of layers of heat-conductive material (72, 74) is comprised between 1 and 30.

9. The structure according to any one of claims 1 to 8, **characterized in that** the heat-conducting material is expanded natural graphite.

10. An ammonia storage and retrieval system of a vehicle including a storage enclosure (8), **characterized in that** the storage enclosure (8) includes a storage structure (7) according to any of claims 1 to 9.

11. The storage system according to claim 10, **characterized in that** the layers of the storage structure (7) rotationally symmetric.

12. The storage system according to claim 11, **characterized in that** the structure (7) has a cutout along the axis of rotational symmetry in order to allow for ammonia to be stored and/or retrieved at each storage layer (71, 73).

13. The storage system according to any one of claims 10 to 12, **characterized in that** it includes a heating device (9) of the storage structure for the retrieval of ammonia stored in the structure (7).

14. The storage system according to claim 13, **characterized in that** the heating device (9) includes several heating modules, each heating module being adapted for heating one storage layer (71, 73) independently from other storage layers.

15. The storage system according to any one of claims 10 to 14, **characterized in that** the structure (7) includes ammonia routing channels from outside the enclosure (8) to said at least one storage layer and in the opposite direction.

16. A selective catalytic reduction system for internal combustion engine exhaust gas, **characterized in that** it comprises an ammonia storage system according to any of claims 10 to 15 and a module for injecting ammonia into the exhaust gas.

17. A method for obtaining an ammonia storage structure according to any of claims 1 to 9, the method including the steps of:
- depositing a storage layer including an uncompressed or pre-compressed salt (71),
- depositing a layer of a heat-conducting material (72) having a thermal conductivity which is greater than that of the storage layer (71) consisting of pre-compressed powder,
said two steps being repeated alternatively so as to form a structure including alternatively storage layers and intervening layer(s) of heat-conducting material.
